(19) Europäisches Patentamt / European Patent Office / Office européen des brevets

(11) **EP 4 502 713 A1**

(12) **EUROPEAN PATENT APPLICATION**
published in accordance with Art. 153(4) EPC

(43) Date of publication:
**05.02.2025 Bulletin 2025/06**

(21) Application number: **22935687.8**

(22) Date of filing: **09.12.2022**

(51) International Patent Classification (IPC):
*G02C 7/06* $^{(2006.01)}$

(52) Cooperative Patent Classification (CPC):
**G02C 7/06**

(86) International application number:
**PCT/JP2022/045392**

(87) International publication number:
**WO 2023/188558 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022053777**

(71) Applicant: **Hoya Lens Thailand Ltd.
Pathumthani 12130 (TH)**

(72) Inventors:
• **QI, Hua
Tokyo 160-8347 (JP)**
• **MATSUOKA, Shohei
Tokyo 160-8347 (JP)**

(74) Representative: **Betten & Resch
Patent- und Rechtsanwälte PartGmbB
Maximiliansplatz 14
80333 München (DE)**

(54) **EYEGLASS LENS AND DESIGN METHOD FOR EYEGLASS LENS**

(57)    An eyeglass lens 1 has a configuration including two optical faces on an object side and an eyeball side, at least one of which has a base surface 11 configured to cause a luminous flux incident from the object side to exit to the eyeball side and converge to a position A on a retina of an eyeball, and a plurality of defocus surfaces 12 configured to cause a luminous flux incident from the object side to exit to the eyeball side and converge to a position B further away from the object side than the position A, wherein a power Pb of the base surface 11 and a defocus power Ps of the defocus surfaces 12 satisfy a relationship of -0.25 Ps < Pb < -Ps.

**FIG. 1**

EP 4 502 713 A1

## Description

TECHNICAL FIELD

The present invention relates to an eyeglass lens and an eyeglass lens design method.

DESCRIPTION OF RELATED ART

As a form of eyeglass lens that has a hyperopia mitigating function, there is an eyeglass lens in which a local concave portion (segment surface) with a lens power is formed in a surface (base surface) of a normally prescribed lens.

For example, Patent Document 1 describes an eyeglass lens having defocus regions that have an effect of converging a luminous flux to a position further away from the object than a position A on the retina in a light travel direction (that is, a position rearward of the position A).

PRIOR ART DOCUMENT

PATENT DOCUMENT

Patent Document 1: WO 2020/067028

SUMMARY

PROBLEM TO BE SOLVED BY DISCLOSURE

An object of the present invention is to provide a technology suitable for achieving a hyperopia mitigating function with a local concave portion formed in a lens surface of an eyeglass lens.

MEANS FOR SOLVING PROBLEM

A first aspect of the present invention is an eyeglass lens including:

two optical faces on an object side and an eyeball side, at least one of which has
a base surface configured to cause a luminous flux incident from the object side to exit to the eyeball side and converge to a position A on a retina of an eyeball, and
a plurality of defocus surfaces configured to cause a luminous flux incident from the object side to exit to the eyeball side and converge to a position B further away from the object side than the position A,
wherein a power Pb of the base surface and a defocus power Ps of the defocus surfaces satisfy a relationship of -0.25 Ps < Pb < -Ps.

A second aspect of the present invention is an eyeglass lens including:

two optical faces on an object side and an eyeball side, at least one of which has

a base surface configured to cause a luminous flux incident from the object side to exit to the eyeball side and converge to a position A on a retina of an eyeball, and
a plurality of defocus surfaces configured to cause a luminous flux incident from the object side to exit to the eyeball side and converge to a position B further away from the object side than the position A,

wherein a power Pb of the base surface, a defocus power Ps of the defocus surfaces, and a refractive index N of a lens substrate serving as a basis of the optical faces satisfy a relationship of $Pb < -0.5(N - 1) - Ps$.

A third aspect of the present invention is an eyeglass lens including:

two optical faces on an object side and an eyeball side, at least one of which has

a base surface configured to cause a luminous flux incident from the object side to exit to the eyeball side and converge to a position A on a retina of an eyeball, and
a plurality of defocus surfaces configured to cause a luminous flux incident from the object side to exit to the eyeball side and converge to a position B further away from the object side than the position A,

wherein a power Pb of the base surface, a defocus power Ps of the defocus surfaces, an arrangement pitch L of the defocus surfaces, and a flat surface size $\varphi$ of the defocus surfaces satisfy a relationship of $(-Ps \times \varphi^2)/L^2 < Pb$.

A fourth aspect of the present invention is a method for designing an eyeglass lens, including the step of:

designing two optical faces on an object side and an eyeball side such that at least one of the two optical faces has a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,
wherein in the step of designing the optical faces, the base surface and the defocus surfaces are designed such that a power Pb of the base surface and a defocus power Ps of the defocus surfaces satisfy a relationship of -0.25 Ps < Pb < -Ps.

A fifth aspect of the present invention is a method for designing an eyeglass lens, including the step of:

designing two optical faces on an object side and an eyeball side such that at least one of the two optical faces has a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,

wherein in the step of designing the optical faces, the base surface and the defocus surfaces are designed such that a power Pb of the base surface, a defocus power Ps of the defocus surfaces, and a refractive index N of a lens substrate serving as a basis of the optical faces satisfy a relationship of Pb < -0.5(N - 1) - Ps.

A sixth aspect of the present invention is a method for designing an eyeglass lens, including the step of:

designing two optical faces on an object side and an eyeball side such that at least one of the two optical faces has a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,

wherein in the step of designing the optical faces, the base surface and the defocus surfaces are designed such that a power Pb of the base surface, a defocus power Ps of the defocus surfaces, an arrangement pitch L of the defocus surfaces, and a flat surface size φ of the defocus surfaces satisfy a relationship of $(-Ps \times \varphi^2)/L^2 < Pb$.

ADVANTAGE OF DISCLOSURE

According to the present invention, a local concave portion formed in a lens surface of an eyeglass lens is suitable for achieving a hyperopia mitigating function.

BRIEF DESCRIPTION OF DRAWINGS

FIG. 1 is a side cross-sectional view showing an example of a configuration of a main portion of a form of eyeglass lens having a hyperopia mitigating function.

FIG. 2 illustrates forms of mold machining for eyeglass lenses having a hyperopia mitigating function.

FIG. 3 illustrates forms in which eyeglass lenses having a hyperopia mitigating function are viewed from the outside.

FIG. 4 illustrates forms of shape measurement of eyeglass lenses having a hyperopia mitigating function.

FIG. 5 illustrates other forms of shape measurement of eyeglass lenses having a hyperopia mitigating function.

FIG. 6 shows, in plan views, forms of the object-side face of an eyeglass lens having a hyperopia mitigating function.

FIG. 7 schematically illustrates optical characteristics of the eyeglass lens having a hyperopia mitigating function.

DETAILED DESCRIPTION OF THE DISCLOSURE

Hereinafter, embodiments of the present invention will be described with reference to the drawings. Note that the following description is illustrative, and the present invention is not limited to the exemplified aspects.

<Findings of the inventors>

Here, the findings of the inventors are described, prior to the description of embodiments of the present invention.

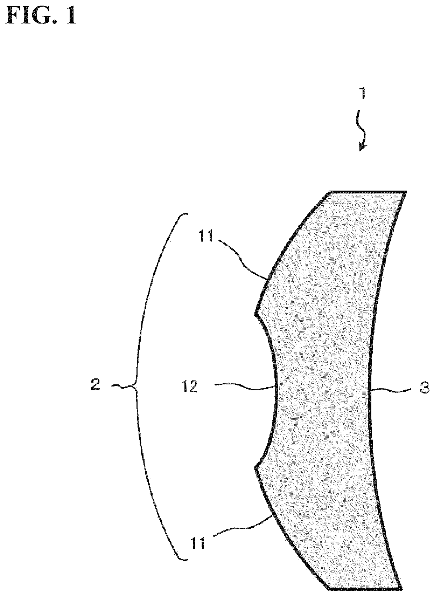

FIG. 1 is a side cross-sectional view showing an example of a configuration of a main portion of a form of eyeglass lens having a hyperopia mitigating function. As illustrated in the figure, there is a form of eyeglass lens having a hyperopia mitigating function in which a local concave portion (segment surface) 12 is formed in a lens surface (base surface) 11.

In an eyeglass lens having such a configuration, light passing through the base surface 11 is focused at a position A on a retina of an eyeball of the wearer. In other words, the base surface 11 is configured to realize a refractive power that is suitably designed based on the wearer's prescription so that light is focused on the retina. On the other hand, light passing through the segment surface 12 is focused at a position further away from the object than the retina (that is, a position B rearward of the position A). That is, the segment surface 12 has a defocus power Ps that is different from the defocus power of the base surface 11 so that light is focused at a position defocused from the position A, thereby realizing a refractive power different from that of the base surface 11. For this reason, in the following description, the segment surface may also be referred to as a "defocus surface".

Thus, the eyeglass lens has a configuration in which, in principle, the base surface 11 converges a luminous flux to the position A on the retina, whereas the segment surface 12 converges a luminous flux to the position B rearward of the retina. By having such optical characteristics, the eyeglass lens will have the function of mitigating hyperopia among the refractive errors of the wearer's eye (that is, hyperopia mitigating function).

Meanwhile, if the segment surface 12 is concave, there is a risk of inconvenience as described below depending on the form of the concave shape.

A lens substrate constituting the eyeglass lens is typically manufactured by molding using a mold. The mold used to manufacture the lens substrate is formed through machining according to the surface shape of the lens substrate. If the lens substrate has a surface shape in which, for example, a local convex portion is added as a segment surface to a base surface, mold machining can be performed by sequential machining in which the base surface shape is formed and then the segment surface shape is further formed. However, if the segment surface is concave, sequential machining cannot be performed in such a procedure, and the base surface shape and the segment surface shape need to be formed simultaneously.

In this case, there is a risk of inconvenience in lens manufacturing depending on a relationship between the base surface shape and the segment surface shape.

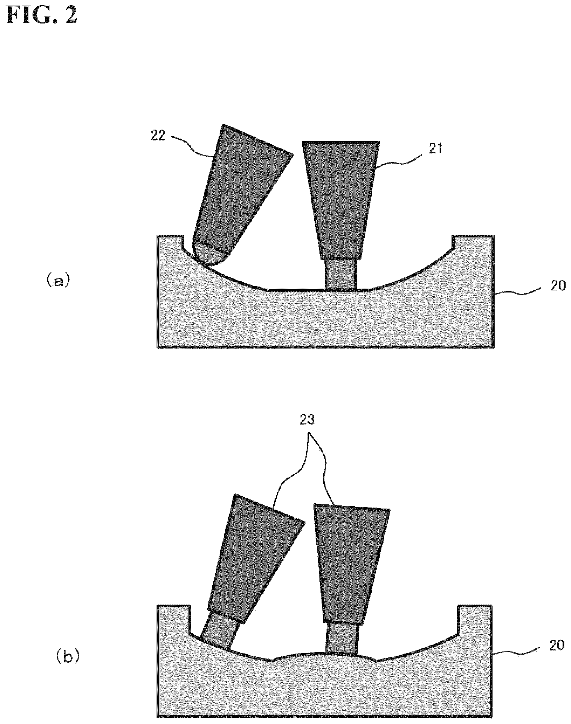

FIG. 2 illustrates forms of mold machining for eyeglass lenses having a hyperopia mitigating function.

In mold machining, it is common to use tool bits having different tip shapes depending on the curved surface shape of a mold to be formed. For example, a round-tip tool bit is used for a curved surface shape of a mold with a negative and small curvature (steep concave curve), and a flat tool bit is used for a curved surface shape of a mold with a large curvature, whether positive or negative (mild convex or concave curve). Therefore, for example, as shown in FIG. 2(a), when a part of a mold 20 that corresponds to the base surface shape and a part of the mold 20 that corresponds to the segment surface shape have a relationship that requires the use of a flat tool bit 21 and a round-tip tool bit 22, which are different tool bits, this may cause a reduction in productivity (efficiency) of mold machining. In contrast, as shown in FIG. 2(b), if the corresponding parts of the mold 20 can be machined with a single tool bit 23, it is possible to suppress a reduction in productivity. However, even if a reduction in productivity can be suppressed, if the tip shape of the tool bit 23 is not suitable for the curved surface shape to be machined, there is a risk that machining marks periodically formed according to the feed pitch of the tool bit 23 will remain. Such machining marks may cause diffraction of light exhibiting reflections like interference colors called iridescence, and may lead to a deterioration in machining quality, so the occurrence of such machining marks should be suppressed.

In other words, the relationship between the base surface shape and the segment surface shape is preferably such that the mold 20 can be machined with the same tool bit and moreover the tip shape of the tool bit is suitable for both curved surface shapes, in order to avoid the inconvenience in lens manufacturing.

Also, if the segment surface 12 is concave, reflected external light can be concentrated by the concave shape, and thus there is a risk of inconvenience when the eyeglass lens is viewed from the outside, depending on the form of the concave shape.

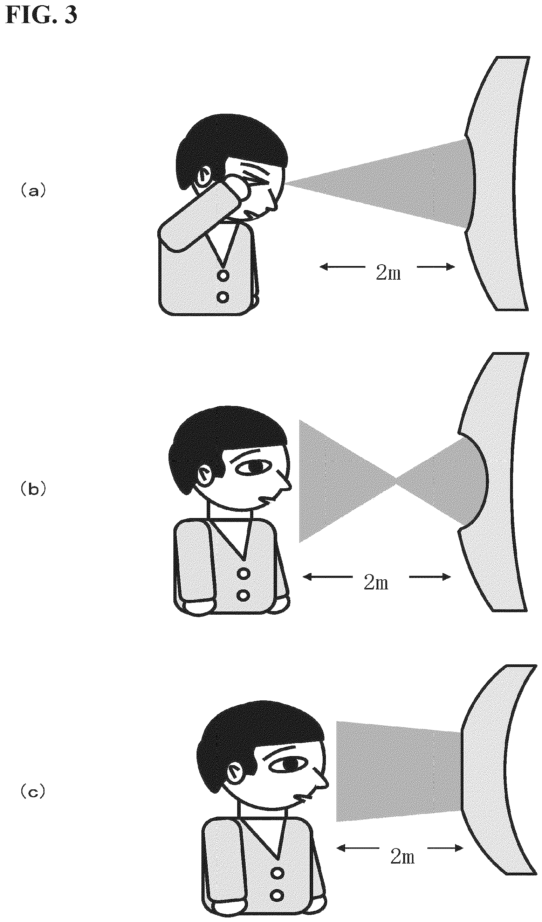

FIG. 3 illustrates forms when eyeglass lenses having a hyperopia mitigating function are viewed from the outside.

A wearer of an eyeglass lens having a hyperopia mitigating function may face another person at a certain distance interval (for example, a distance of about 2 m that should be secured as a social distance). In this case, for example, as shown in FIG. 3(a), if the form of the concave shape of the segment surface is such that reflected external light is concentrated on the other person facing the eyeglass lens (for example, a mild concave curve), inconvenience may arise where, for example, the other person facing the eyeglass lens (i.e., the person viewing the eyeglass lens from the outside) feels dazzled.

In other words, the concave shape of the segment surface preferably has a form in which, as shown in FIG. 3(b), reflected external light is concentrated in front of the other person facing the eyeglass lens and is converted into divergent light (for example, a steep concave curve). This is because if the reflected external light is converted into divergent light, the other person facing the eyeglass lens will not feel dazzled, making it possible to avoid any inconvenience occurring when the eyeglass lens is viewed from the outside.

Note that such a phenomenon is unique to concave shapes and does not pose any problem if the segment surface has a shape other than concave shapes (such as a convex shape or a flat shape), as shown in FIG. 3(c).

Also, for eyeglass lenses having a hyperopia mitigating function, it may be necessary to measure the surface shape of the eyeglass lenses. In this case, there is a risk of inconvenience when performing the shape measurement, depending on the relationship between the base surface shape and the segment surface shape.

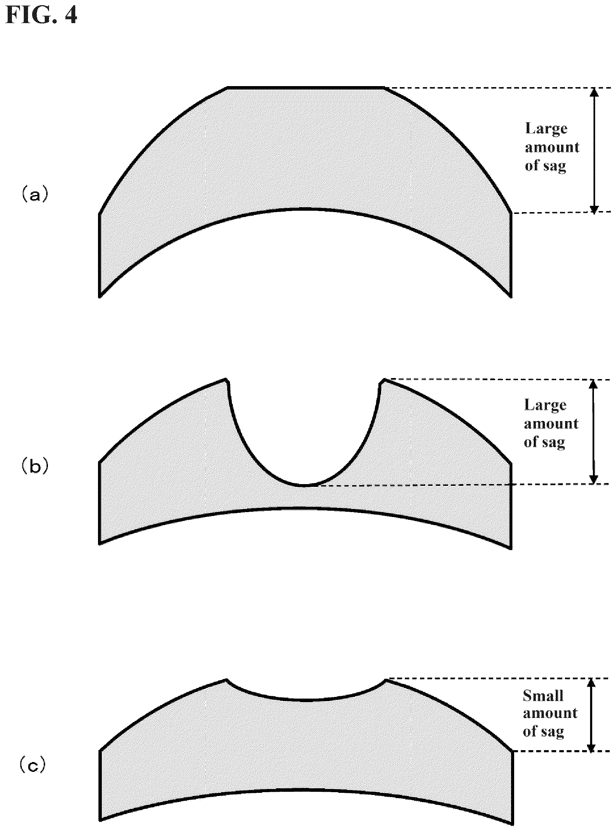

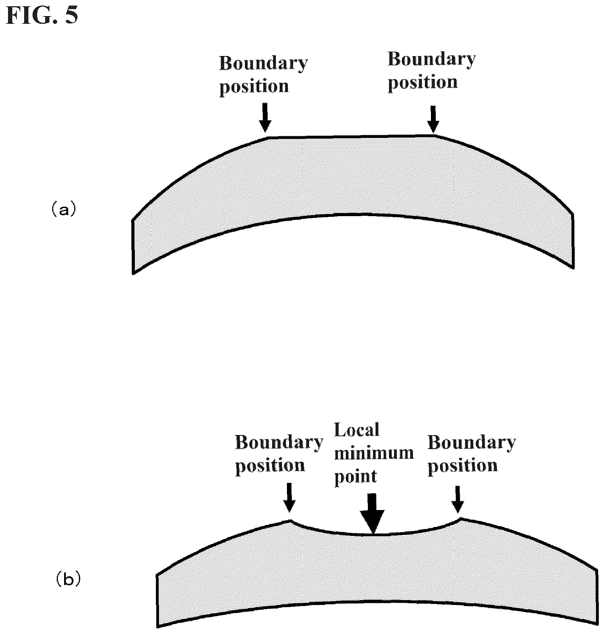

FIG. 4 illustrates forms of shape measurement of eyeglass lenses having a hyperopia mitigating function. FIG. 5 illustrates other forms of shape measurement of eyeglass lenses having a hyperopia mitigating function.

The shape measurement of the surface shape of eyeglass lenses is performed using, for example, a white interferometer. A white interferometer measures a surface shape by converting interference fringe information obtained from optical path differences caused by surface irregularities into height information. However, the interference depth of white light is as narrow as about 2 $\mu$m. Therefore, for example, when the amount of sag in a base surface shape is large as shown in FIG. 4(a), or when the amount of sag in a segment surface shape is large as shown in FIG. 4(b), the depth of the white interferometer used for shape measurement may be insufficient to detect the surface shape. In other words, to enable shape measurement regardless of the depth of the white interferometer, it is advantageous that the amounts of sag in the base surface shape and the segment surface shape are both small, as shown in FIG. 4(c).

When measuring the position of the segment surface on the surface of an eyeglass lens, it is conceivable, for example, to identify the center position of the segment surface based on boundary positions between the base surface and the segment surface, as shown in FIG. 5(a). However, in this case, if the boundary positions are not clear, there may be such an inconvenience that the center position cannot be determined correctly. Accordingly, it is preferable to identify the center position of the segment surface taking into consideration, in addition to the boundary positions, a local minimum point of the segment surface, as shown in FIG. 5(b). In other words, in order to enable correct identification of the center position of the segment surface, the segment surface needs to have a shape in which the local minimum point can be identified.

As described above, in order to avoid the inconvenience in shape measurement, it is preferable that the relationship between the base surface shape and the segment surface shape is such that both the surface shapes have a small amount of sag and furthermore the segment surface has a shape that enables the local minimum point to be identified.

The present invention has been accomplished based on the above-described findings of the inventors and provides a technology suitable for achieving a hyperopia mitigating function with a local concave portion formed in a lens surface of an eyeglass lens. Hereinafter, the technology is specifically described with reference to the embodiments.

<First Embodiment>

First, a first embodiment of the present invention will be described.

(1) Configuration of Eyeglass Lens

As shown in FIG. 1, an eyeglass lens 1 according to the present embodiment includes an object-side face 2 and an eyeball-side face 3 as two optical faces. The "object-side face" is a surface that is located on the object side when a wearer wears a pair of glasses including the eyeglass lens 1. The "eyeball-side face" is a surface that is located on the opposite side, that is, the eyeball side when the wearer wears the pair of glasses including the eyeglass lens 1.

Also, the eyeglass lens 1 is provided with a lens substrate. The lens substrate is made of, for example, a thermosetting resin material such as thiourethane, allyl, acrylic, or epithio resin. As the resin material for forming the lens substrate, other resin materials that realize a desired refractive power may be selected. The lens substrate may also be made of inorganic glass instead of resin material.

At least one of the object-side face and the eyeball-side face of the lens substrate is coated with a film. Examples of the film may include a hard coat film and an antireflection film (AR film), but in addition to these, other films may be formed.

A hard coat film is made of, for example, a thermoplastic or UV curable resin. The hard coat film can be formed by dipping the lens substrate in a hard coating solution or by using spin coating or other methods. The coating with such a hard coat film can improve the durability of the eyeglass lens 1.

An antireflection film is formed, for example, through vacuum deposition of an antireflective agent such as $ZrO_2$, $MgF_2$, or $Al_2O_3$. The coating with such an antireflection film can improve the visibility of an image through the eyeglass lens 1.

Note that the later-described surface shape of the eyeglass lens 1 may be realized by the lens substrate that constitutes the eyeglass lens 1, or by the coating that coats the lens substrate.

The eyeglass lens 1 according to the present embodiment is a hyperopia mitigating lens having a hyperopia mitigating function. For this, the eyeglass lens 1 has a configuration in which at least one of the two optical faces, namely, the object-side face 2 and the eyeball-side face 3 has a base surface 11 and a plurality of defocus surfaces 12. In the present embodiment, the base surface 11 and the defocus surfaces 12 are provided on the object-side face 2. That is, the base surface 11 and the plurality of defocus surfaces 12 constitute the object-side face 2. Note however that the present invention is not limited to such a configuration, and the object-side face 2 may have, in addition to the base surface 11 and the defocus surfaces 12, other surfaces.

[Base Surface]

The base surface 11 is a surface that constitutes a region on the lens that is designed based on the prescribed refractive power of the wearer. By having the base surface 11, the eyeglass lens 1 according to the present embodiment is configured to cause a luminous flux incident on the base surface 11 from the object side to exit from the eyeball-side face 3 and converge to a predetermined position (position A) on a retina through a pupil of an eyeball of the wearer.

In the present embodiment, the base surface 11 is a surface located on the object side and is constituted by a convex surface protruding toward the object side. The surface shape of the convex surface constituting the base surface 11 is not particularly limited as long as it is capable of realizing the prescribed refractive power of the wearer and does not impair the purpose of the invention. That is, the surface shape of the base surface 11 may be, for example, a spherical shape, an aspheric shape, a toric shape, or a mixture thereof. In the present embodiment, a case where the base surface 11 has a spherical surface shape is exemplified.

Note that the prescribed refractive power realized by the base surface 11 may be set to a weaker or stronger refractive power according to the wearer's adaptation to and preference with respect to eyeglasses, and the like. In this case, the position at which a luminous flux is converged is, to be exact, not directly above the retina but is slightly displaced therefrom. However, this is considered as convergence on the retina in the present specification.

[Defocus Surface]

The plurality of defocus surfaces 12 are each a surface that constitutes a region on the lens that is designed to function as a segment surface having a power different from that of the base surface 11. By having the defocus surfaces 12, the eyeglass lens 1 according to the present embodiment is configured to cause a luminous flux incident on the defocus surfaces 12 from the object side to exit from the eyeball-side face 3 and converge to a position further away from the object side than the position A (i.e., a position B further rearward of the retina than the position A) through the pupil of the eyeball of the wearer.

In the present embodiment, the defocus surfaces 12 are surfaces located on the object side, similar to the base surface 11, but have a different surface shape from the base surface 11 so that a luminous flux is not concentrated at the position at which a luminous flux is concentrated by the base surface 11.

The defocus surfaces 12 are configured as local concave segment surfaces. This difference in surface shape allows the defocus surfaces 12 to converge a luminous flux to a position different from the position at which a luminous flux is concentrated by the base surface 11 (specifically, the position B further rearward of the retina than the position A), even though the eyeball-side face 3 has the same surface shape between the region facing the base surface 11 and the regions facing the defocus surfaces 12.

In other words, letting the power of the base surface 11 be Pb (unit: D, diopter) and the defocus power of the defocus surfaces 12 be Ps (unit: D, diopter), the power Pb and the defocus power Ps satisfy the relationship of Ps < -0.25 and Pb + Ps ≥ 0.

Here, the power Pb of the base surface 11 expresses the curve of the base surface 11 in units of D (diopter) and satisfies the relationship of Pb = 1000/{curvature radius × (refractive index - 1)}.

The defocus power Ps of the defocus surfaces 12, which is referred to as "defocus power" rather than just "power", expresses the deviation of the curve of the defocus surfaces 12 from the base surface 11 in units of D (diopter). In other words, the defocus power Ps corresponds to the relative difference of the defocus surfaces 12 from the base surface 11. Therefore, Pb + Ps is equal to the power of the defocus surfaces 12.

Note that, although it is conceivable that the surface shape of the defocus surfaces 12 is, for example, a spherical shape, the present invention is not limited to such a configuration, and another surface shape may be employed. For example, the surface shape of the defocus surfaces 12 may be an aspherical shape with different curvature between the center and the periphery of each segment, which adds a depth enhancement effect due to spherical aberration, a toroidal shape with different curvature depending on the cross section of the segment, which adds astigmatism in accordance with ocular aberration, an asymmetric segment shape, which adds depth enhancement effect due to coma aberration, or a combined shape of the above-described shapes, which compounds the above aberrations.

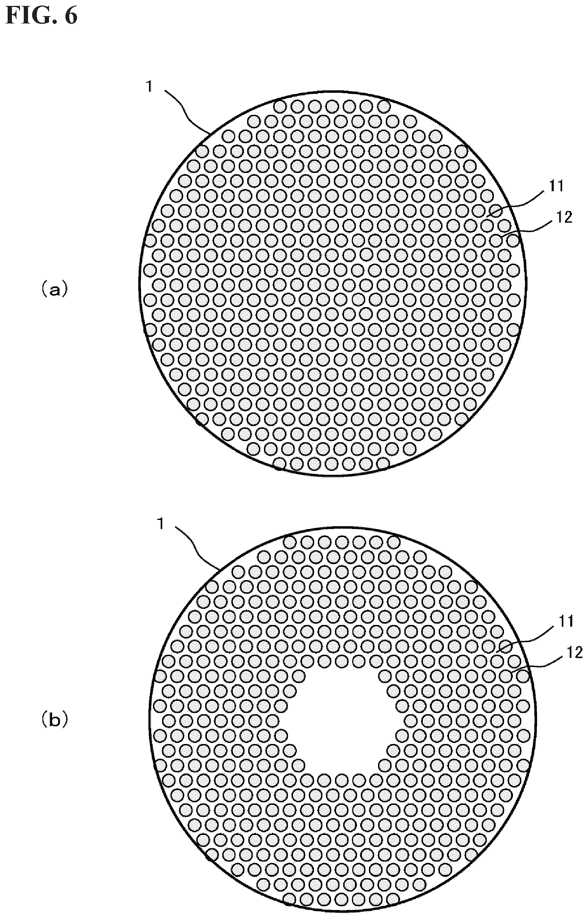

FIG. 6 shows, in plan views, forms of the object-side surface of the eyeglass lens having a hyperopia mitigating function.

As described above, in the present embodiment, the object-side face of the eyeglass lens 1 includes the base surface 11 and the plurality of defocus surfaces 12.

Of these surfaces, the plurality of defocus surfaces 12 are each formed in a circular shape when viewed in a plan view, and are arranged like islands, as shown in FIG. 6 (i.e., in a state in which they are spaced apart from each other without abutting against each other). In other words, the defocus surfaces 12 are arranged discretely (i.e., in a state in which they are not continuous with each other but are separated and scattered). However, although the case in which all of the defocus surfaces 12 are arranged like islands is illustrated here, the present invention is not limited to such a configuration, and the defocus surfaces 12 may be arranged so as to include some defocus surfaces 12 whose outer edges in adjacent areas are connected or in contact with each other. In any case, the defocus surfaces 12 are preferably arranged periodically. With this configuration, it is possible to suppress discomfort such as blurring in a particular direction and improve the wear feeling of the eyeglass lens 1. Note that the number of arranged defocus surfaces 12 is not particularly limited but is not less than 20 and not more than 500, for example.

As shown in FIG. 6(a), the plurality of defocus surfaces 12 may be formed, for example, over the entire lens area of the eyeglass lens 1, but the present invention is not limited to such a configuration. For example, as shown in FIG. 6(b), they may be formed except for a region in the vicinity of the lens center (geometric center, optical center, or centering center) of the eyeglass lens 1 so as to surround the region. Furthermore, they may be partially formed in other partial regions (for example, only in the region in the vicinity of the lens center). Alternatively, they may be formed in a predetermined region, excluding a region in the vicinity of the center and a region in the vicinity of the outer edge of the eyeglass lens 1.

(2) Optical Characteristics of Eyeglass Lens

The following will describe optical characteristics of the eyeglass lens 1 having the above-described configurations.

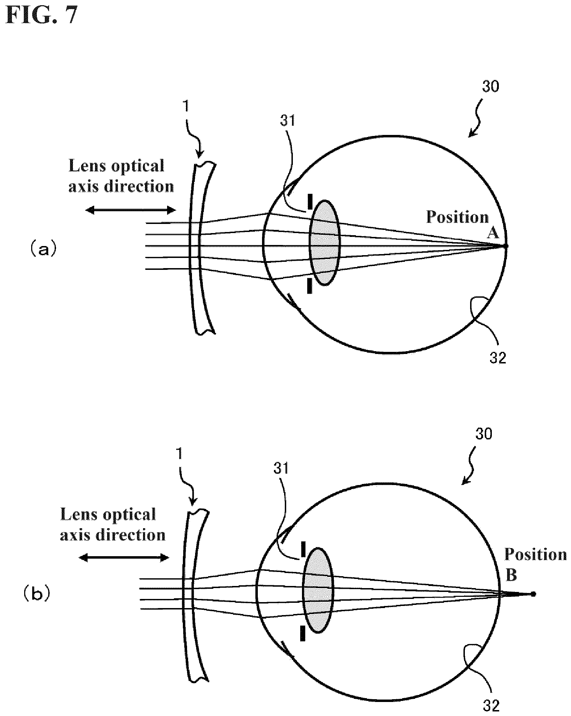

FIG. 7 schematically illustrates examples of optical characteristics of the eyeglass lens having a hyperopia mitigating function.

With the base surface 11 and the plurality of defocus surfaces 12, the eyeglass lens 1 having the above-described configurations achieves the following optical characteristics.

For example, as shown in FIG. 7(a), light having passed through the base surface 11 is focused at the position A on a retina 32 via a pupil 31 of an eyeball 30 of the wearer. In other words, the base surface 11 is configured to achieve a refractive power designed as appropriate based on the wearer's prescription so that light is focused at the position A on the retina 32.

On the other hand, as shown in FIG. 7(b), light having passed through the defocus surfaces 12 is focused at a position further away from the object side than the position A (i.e., position B further rearward of the retina than the position A) via the pupil 31 of the eyeball 30 of the wearer. That is, the defocus surfaces 12 have a defocus power Ps that is different from that of the base surface 11 so that light is focused at the position B defocused from the position A, thereby realizing a refractive power different from that of the base surface 11.

Note that "focused" in this context means that light is concentrated to form an image, but the formed image is not necessarily aberration-free but may have spherical aberration or astigmatism.

Thus, the eyeglass lens 1 has a configuration in which, in principle, the base surface 11 converges a luminous flux to the position A on the retina 32, whereas the portion where the defocus surfaces 12 are arranged converges a luminous flux to the position B further rearward of the retina 32 than the position A. With such optical characteristics, the eyeglass lens 1 will have the function to mitigate hyperopia among the refractive errors of the wearer's eye (that is, hyperopia mitigating function).

(3) Specific Examples of Segment Surface Shape

The following will describe a specific form of the surface shape of the defocus surfaces 12 of the eyeglass lens 1 having the above-described optical characteristics.

As described above, when the defocus surfaces 12 are concave, there is a risk of inconvenience in lens manufacturing, depending on the form of the concave shape.

In the present embodiment, thus, in order to avoid any inconvenience in lens manufacturing, the surface shape of the base surface 11 (i.e., base surface shape) and the surface shape of the defocus surfaces 12 (i.e., segment surface shape) are set so that the base surface 11 and the defocus surfaces 12 satisfy the relationship described below.

For example, the refractive index of the lens substrate constituting the eyeglass lens 1 is defined as N, the power of the base surface 11 is defined as Pb [D (diopter)], and the defocus power of the defocus surfaces 12 is defined as Ps [D]. In this case, the refractive power [D] of the defocus surfaces 12 is expressed as Pb + Ps. The curvature [1/M] of the defocus surfaces 12 is expressed as (Pb + Ps)/(N - 1). Note that the refractive index N refers to the refractive index Ne at the e-line (wavelength of 546.1 nm).

Here, since the defocus surfaces 12 are regions for realizing the hyperopia mitigating function, the minimum defocus power Ps[D] required to converge a luminous flux to the position B, which is located further rearward of the retina than the position A, is defined by the following formula (1).

$$Ps < -0.25 \ldots (1)$$

In order to avoid any inconvenience in lens manufacturing even if the defocus surfaces 12 are concave, it is also conceivable to set the absolute values of the curvatures of the base surface 11 and the defocus surfaces 12 to be equal to each other. This is because if their curvatures are equal to each other, the mold 20 can be machined with the same tool bit.

If the base surface 11 and the defocus surfaces 12 satisfy the relationship Pb = -0.5Ps, the curvatures of the base surface 11 and the defocus surfaces 12 are equal to each other. Accordingly, assuming that the power Pb of the base surface 11 is about $1 < Pb < 4$, the absolute values of the curvatures of the base surface 11 and the defocus surfaces 12 can be equal to each other if the power Pb and the defocus power Ps are in the relationship defined by the following formula (2).

$$-0.25\,Ps < Pb < -Ps \ldots (2)$$

Note that, more preferably, assuming that the power Pb of the base surface 11 is about $1 < Pb < 3$, the power Pb and the defocus power Ps may be in the relationship defined by the following formula (2)'.

$$-0.25Ps < Pb < -0.5Ps \ldots (2)'$$

As described above, in the present embodiment, the base surface shape and the segment surface shape are set so that the power Pb of the base surface 11 and the defocus power Ps of the defocus surfaces 12 at least satisfy the relationship of $-0.25\,Ps < Pb < -Ps$.

Therefore, according to the eyeglass lens 1 of the present embodiment, even if the defocus surfaces 12 are concave, it is possible to avoid any inconvenience in lens manufacturing while reliably achieving the hyperopia mitigating function.

(4) Eyeglass Lens Design Method and Manufacturing Method

The present invention is also applicable to a method for designing the eyeglass lens 1 or a method for manufacturing the eyeglass lens 1.

For example, the method for designing the eyeglass lens 1 includes: a process of designing the optical faces 2 and 3 on the object side and the eyeball side such that at least one of the two optical faces 2 and 3 includes the base surface 11 that causes a luminous flux incident from the object side to exit to the eyeball side and converge to the position A on the retina 32 of the eyeball 30, and the plurality of defocus surfaces 12 that causes a luminous flux incident from the object side to exit to the eyeball side and converge to the position B, which is further away from the object side than the position A. In the process of designing the optical faces 2 and 3, the base surface 11 and the defocus surfaces 12 are designed such that the power Pb of the base surface 11 and the defocus power Ps of the defocus surfaces 12 at least satisfy the relationship of -0.25 Ps < Pb < -Ps, more preferably the relationship of -0.25 Ps < Pb <-0.5 Ps.

The method for manufacturing the eyeglass lens 1 is substantially the same, and by performing the above-described process, the eyeglass lens 1 is manufactured. Note that processes other than those described here need only be realized using known technologies.

Through the above-described method for designing the eyeglass lens 1 or method for manufacturing the eyeglass lens 1, the eyeglass lens 1 according to the present embodiment can be obtained.

(5) Effects of Present Embodiment

According to the present embodiment, one or more of the following effects can be realized.

In the present embodiment, the eyeglass lens 1 includes the base surface 11 and the plurality of defocus surfaces 12, wherein the base surface 11 converges a luminous flux to the position A on the retina 32, whereas the defocus surfaces 12 converges a luminous flux to the position B, which is further rearward of the retina 32 than the position A. With such optical characteristics, the eyeglass lens 1 will have the function to mitigate hyperopia among the refractive errors of the wearer's eye (that is, hyperopia mitigating function).

Moreover, in the present embodiment, the base surface shape and the segment surface shape of the eyeglass lens 1 are set so that the power Pb of the base surface 11 and the defocus power Ps of the defocus surfaces 12 at least satisfy the relationship of -0.25 Ps < Pb < -Ps. Accordingly, even if the defocus surfaces 12 are concave, it is possible to avoid any inconvenience in lens manufacturing if the form of the surface shape as in the present embodiment is employed.

In other words, according to the present embodiment, it is possible to avoid any inconvenience in lens manufacturing, as a result, the eyeglass lens 1 is suited for realizing the hyperopia mitigating function with local concave portions formed in the lens surface of the eyeglass lens 1.

<Second Embodiment>

The following will describe a second embodiment of the present invention. Note that the description here is given mainly about the differences from the first embodiment.

As described above, if the defocus surfaces 12 are concave, there is a risk of inconvenience when the eyeglass lens 1 is viewed from the outside, depending on the form of the concave shape.

To avoid any inconvenience occurring when the eyeglass lens 1 is viewed from the outside, according to the present embodiment, thus, the base surface shape and the segment surface shape are set so that the base surface 11 and the defocus surfaces 12 satisfy the relationship described below.

For example, a wearer of eyeglass lenses may face another person at a certain distance interval (for example, a distance of about 2 m that should be secured as a social distance) (see FIG. 3). In this case, in order to avoid any inconvenience occurring when the eyeglass lens 1 is viewed from the outside even if the defocus surfaces 12 are concave, it is preferable that the reflected external light be concentrated in front of the other person facing the eyeglass lens and is converted into divergent light (see FIG. 3(b)). This is because if the reflected external light is converted into divergent light, the other person facing the eyeglass lens will not feel dazzled, making it possible to avoid any inconvenience occurring when the eyeglass lens 1 is viewed from the outside.

Here, assuming that the distance interval to the other person facing the eyeglass lens is about 2 m, it is conceivable to set the curvature of the defocus surfaces 12 to (Pb + Ps)/(N - 1) <-0.5 in order to allow reflected light that may reach the other person to be converted into divergent light. This is because, with such a curvature, reflected external light will be concentrated in front of the other person facing the eyeglass lens.

Therefore, when the relationship of (Pb + Ps)/(N - 1) <-0.5 is converted, the power Pb of the base surface 11 and the defocus power Ps of the defocus surfaces 12 will satisfy the relationship defined by the following formula (3).

$$Pb < -0.5(N - 1) - Ps \ldots (3)$$

As described above, in the present embodiment, the base surface shape and the segment surface shape are set so that the power Pb of the base surface 11, the defocus power Ps of the defocus surfaces 12, and the refractive index N of the lens substrate serving as a basis of the optical faces 2 and 3 satisfy the relationship of Pb < -0.5(N - 1) - Ps. Therefore, according to the eyeglass lens 1 of the present embodiment, even if the defocus surfaces 12 are concave, it is possible to avoid any inconvenience occurring when the eyeglass lens 1 is viewed from the outside, while reliably achieving the hyperopia mitigating function.

In other words, according to the present embodiment, it is possible to avoid any inconvenience occurring when the eyeglass lens 1 is viewed from the outside, and as a result, the eyeglass lens 1 is suited for realizing the hyperopia mitigating function with local concave portions formed in the lens surface of the eyeglass lens 1.

Note that also in the present embodiment, similar to the case of the first embodiment, the present invention is applicable to the method for designing the eyeglass lens 1 or the method for manufacturing the eyeglass lens 1.

For example, the method for designing the eyeglass lens 1 includes: a process of designing the optical faces 2 and 3 on the object side and the eyeball side such that at least one of the two optical faces 2 and 3 includes the base surface 11 that causes a luminous flux incident from the object side to exit to the eyeball side and converge to the position A on the retina 32 of the eyeball 30, and the plurality of defocus surfaces 12 that causes a luminous flux incident from the object side to exit to the eyeball side and converge to the position B, which is further away from the object side than the position A. In the process of designing the optical faces 2 and 3, the base surface 11 and the defocus surfaces 12 are designed such that the power Pb of the base surface 11, the defocus power Ps of the defocus surfaces 12, and the refractive index N of the lens substrate serving as a basis of the optical faces 2 and 3 satisfy the relationship of Pb < -0.5(N - 1) - Ps.

The method for manufacturing the eyeglass lens 1 is substantially the same.

<Third Embodiment>

The following will describe a third embodiment of the present invention. Note that also here, the description is given mainly about the differences from the first embodiment or the second embodiment.

As described above, when the defocus surfaces 12 are concave, there is a risk of inconvenience in measuring the shape of the eyeglass lens 1 depending on the form of the concave shape.

To avoid any inconvenience in measuring the shape of the eyeglass lens 1, according to the present embodiment, thus, the base surface shape and the segment surface shape are set so that the base surface 11 and the defocus surfaces 12 satisfy the relationship described below.

For example, to measure the shape of the eyeglass lens 1 using a white interferometer or the like, it is advantageous that the amounts of sag in the base surface shape and the segment surface shape are both small (see FIG. 4). For this purpose, at least the concave defocus surfaces 12 need to have a shape such that the concave shape is not too deep (in other words, the range in which the tool bit for machining the mold is moved is not too deep). Furthermore, when the defocus surfaces 12 are concave, it is preferable that the defocus surfaces 12 have a segment surface shape for which a local minimum point can be identified when measuring the position of the defocus surfaces 12 (see FIG. 5).

Accordingly, it is conceivable to satisfy the relationship of the amount of sag on the base surface 11 + the amount of cutting in the defocus surfaces 12 per one cycle of mold machining > 0.

Therefore, letting the arrangement pitch of the defocus surfaces 12 be L[mm] and the flat surface size be $\varphi$[mm], the relationship of the power Pb of the base surface 11 and the defocus power Ps of the defocus surfaces 12 can be expressed by the following formula (4). Note that the arrangement pitch L is a value representing the size of the distance between the segment centers of two defocus surfaces 12 arranged closest to each other. Also, the flat surface size $\varphi$ is a value representing the planar size of the defocus surfaces 12 and corresponds to the diameter size when the defocus surfaces 12 have, for example, a planar circular shape.

$$Pb \times L^2 + Ps \times \varphi^2 > 0 \ \dots \ (4)$$

When the formula (4) is converted, the refractive power Pb and the defocus power Ps will satisfy the relationship defined by the following formula (4)'.

$$(\text{-Ps} \times \varphi^2)/L^2 < Pb \ \dots \ (4)'$$

As described above, in the present embodiment, the base surface shape and the segment surface shape are set so that the power Pb of the base surface 11, the defocus power Ps of the defocus surfaces 12, the arrangement pitch L of the defocus surfaces 12, and the flat surface size $\varphi$ of the defocus surfaces 12 satisfy the relationship of (-Ps $\times \varphi^2$)/L$^2$ < Pb. Therefore, according to the eyeglass lens 1 of the present embodiment, even if the defocus surfaces 12 are concave, it is possible to avoid any inconvenience in measuring the shape of the eyeglass lens 1, while reliably achieving the hyperopia mitigating function.

In other words, according to the present embodiment, it is possible to avoid any inconvenience in measuring the shape of the eyeglass lens 1, and as a result, the eyeglass lens 1 is suited for realizing the hyperopia mitigating function with local concave portions formed in the lens surface of the eyeglass lens 1.

Note that also in the present embodiment, similar to the case of the first embodiment or the second embodiment, the present invention is applicable to the method for designing the eyeglass lens 1 or the method for manufacturing the eyeglass lens 1.

For example, the method for designing the eyeglass lens 1 includes: a process of designing the optical faces 2 and 3 on the object side and the eyeball side such that at least one of the two optical faces 2 and 3 includes the base surface 11 that causes a luminous flux incident from the object side to exit to the eyeball side and converge to the position A on the retina 32 of the eyeball 30, and the plurality of defocus surfaces 12 that causes a luminous flux incident from the object side to exit to the eyeball side and converge to the position B, which is further away from the object side than the position A. In the process of designing the optical faces 2 and 3, the base surface 11 and the defocus surfaces 12 are designed such that the power Pb of the base surface 11, the defocus power Ps of the defocus surfaces 12, the arrangement pitch L of the defocus surfaces 12, and the flat surface size $\varphi$ of the defocus surfaces 12 satisfy the relationship of $(-Ps \times \varphi^2)/L^2 < Pb$.

The method for manufacturing the eyeglass lens 1 is substantially the same.

<Modifications and the like>

The embodiments of the present invention have been described so far, but the technical scope of the present invention is not limited to the above-described exemplary disclosure and can be modified in various ways without departing from the gist thereof.

An example is an eyeglass lens including:

two optical faces on an object side and an eyeball side, at least one of which has

a base surface configured to cause a luminous flux incident from the object side to exit to the eyeball side and converge to a position A on a retina of an eyeball, and
a plurality of defocus surfaces configured to cause a luminous flux incident from the object side to exit to the eyeball side and converge to a position B further away from the object side than the position A,

wherein a power Pb of the base surface and a defocus power Ps of the defocus surfaces satisfy a relationship of $-0.25\,Ps < Pb < -Ps$.

Another example is an eyeglass lens including:

two optical faces on an object side and an eyeball side, at least one of which has

a base surface configured to cause a luminous flux incident from the object side to exit to the eyeball side and converge to a position A on a retina of an eyeball, and
a plurality of defocus surfaces configured to cause a luminous flux incident from the object side to exit to the eyeball side and converge to a position B further away from the object side than the position A,

wherein a power Pb of the base surface, a defocus power Ps of the defocus surfaces, and a refractive index N of a lens substrate serving as a basis of the optical faces satisfy a relationship of $Pb < -0.5(N - 1) - Ps$.

Yet another example is an eyeglass lens including:

two optical faces on an object side and an eyeball side, at least one of which has

a base surface configured to cause a luminous flux incident from the object side to exit to the eyeball side and converge to a position A on a retina of an eyeball, and
a plurality of defocus surfaces configured to cause a luminous flux incident from the object side to exit to the eyeball side and converge to a position B further away from the object side than the position A,

wherein a power Pb of the base surface, a defocus power Ps of the defocus surfaces, an arrangement pitch L of the defocus surfaces, and a flat surface size $\varphi$ of the defocus surfaces satisfy a relationship of $(-Ps \times \varphi^2)/L^2 < Pb$.

For example, the first to third embodiments described above are not limited to the case where they are implemented individually but may be implemented in appropriate combination.

For example, in each of the embodiments described above, a case is conceivable in which all of the plurality of defocus surfaces 12 of the eyeglass lens 1 satisfy the relationship described in any one of the first to third embodiments, but the present invention is not limited to such a configuration. In other words, if at least some of the defocus surfaces 12 satisfy the relationship described in any one of the first to third embodiments, this case falls within the technical scope of the present invention even if the defocus surfaces 12 include some defocus surfaces that do not satisfy the relationship.

Although specific examples (see FIGS. 6(a) and 6(b)) are given for the planar arrangement of the plurality of defocus surfaces 12, the present invention is not limited thereto. In other words, the defocus surfaces 12 need only be arranged at multiple locations on the lens, and the arrangement form is not limited to a particular form.

For example, the above-described embodiments have described taking specific values for the power Pb of the base surface 11 and the defocus power Ps of the defocus surfaces 12 as examples, but the present invention is not limited to these values and may be set as appropriate.

In other words, the base surface 11 can have a shape designed based on the prescription information of the wearer. For example, by providing a base surface 11 (e.g., the object-side face) and another face (e.g., the eyeball-side face) opposite to this, the eyeglass lens 1 can realize a prescription power (a power determined so that an image is formed substantially on the retina in the standard wearing state). Similarly, the shape of the defocus surfaces 12 can also have a shape designed based on the prescription information of the wearer. Then, by making the design innovations defined in the claims, the advantageous effect of the present invention can be obtained.

For example, the above-described embodiments have described an example in which the base surface 11 and the defocus surface 12 are provided on the object-side face, but the present invention is not limited to such a configuration.

Typically, most eyeglass lenses have a convex surface on the object side, and thus the base surface 11 and the defocus surfaces 12 can be provided on that object-side face. However, if a convex surface is provided on the eyeball-side face, the base surface 11 and the defocus surfaces 12 may be provided on this eyeball-side face.

For example, the above-described embodiments have described an example in which an eyeglass lens 1 is constituted by the object-side face 2 and the eyeball-side face 3, but the present invention is not limited to such a configuration, and other forms (for example, a form with a multi-face junction configuration including a functional film such as a polarizing film inside the lens) are also included in the technical scope of the present invention.

In the eyeglass lens 1, some or all of the power and defocus power of the base surface 11 and defocus surfaces 12 can be recorded on one of the sides of the lens by engraving or another means. At least some of other pieces of information about the lens (for example, later-described wearer information) can also be recorded on the eyeglass lens 1 by the same or different means.

Also, the eyeglass lens 1 may be managed while being linked to wearer's information regarding the wearer of the lens. In other words, the eyeglass lens 1 together with the wearer information may be handled as a lens product or may be subjected to transaction.

In this case, for example, the wearer information may be recorded on a lens bag used in the lens transaction process, or on storage media possessed by traders including opticians, or may be provided or transmitted by electronic communication lines in a state in which lens matching is possible.

The wearer information may include prescription information (such as e.g., spherical power, cylinder power, astigmatic axis) of the wearer or may include wearing parameters (such as interpupillary distance of the wearer, anterior tilt angle during wearing as determined by the frame for use, and frame corneal distance).

The technical scope of the present invention includes the following eyeglass lenses.

An example is an eyeglass lens including:

two optical faces on an object side and an eyeball side, at least one of which has

a base surface configured to cause a luminous flux incident from the object side to exit to the eyeball side and converge to a position A, and a plurality of defocus surfaces configured to cause a luminous flux incident from the object side to exit to the eyeball side and converge to a position B further away from the object side than the position A,

wherein a power Pb of the base surface and a defocus power Ps of the defocus surfaces satisfy a relationship of $-0.25\,Ps < Pb < -Ps$.

Another example is an eyeglass lens including:

two optical faces on an object side and an eyeball side, at least one of which has

a base surface configured to cause a luminous flux incident from the object side to exit to the eyeball side and converge to a position A, and a plurality of defocus surfaces configured to cause a luminous flux incident from the object side to exit to the eyeball side and converge to a position B further away from the object side than the position A,

wherein a power Pb of the base surface, a defocus power Ps of the defocus surfaces, and a refractive index N of a lens substrate serving as a basis of the optical faces satisfy a relationship of $Pb < -0.5(N-1) - Ps$.

Yet another example is an eyeglass lens including:

two optical faces on an object side and an eyeball side, at least one of which has

a base surface configured to cause a luminous flux incident from the object side to exit to the eyeball side and converge to a position A, and a plurality of defocus surfaces configured to cause a luminous flux incident from the object side to exit to the eyeball side and converge to a position B further away from the object side than the position A,

wherein a power Pb of the base surface, a defocus power Ps of the defocus surfaces, an arrangement pitch L of the defocus surfaces, and a flat surface size φ of the defocus surfaces satisfy a relationship of $(-Ps \times \varphi^2)/L^2 < Pb$.

DESCRIPTION OF SIGNS AND NUMERALS

1 ... Eyeglass lens, 2 ... Object-side face, 3 ... Eyeball-side face, 11 ... Base surface, 12 ... Defocus surface (segment surface), 30 ... Eyeball, 31 ... Pupil, 32 ... Retina

**Claims**

1. An eyeglass lens comprising:

   two optical faces on an object side and an eyeball side, at least one of which has

   a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,

   wherein a power Pb of the base surface and a defocus power Ps of the defocus surfaces satisfy a relationship of -0.25 Ps < Pb < -Ps.

2. An eyeglass lens comprising:

   two optical faces on an object side and an eyeball side, at least one of which has

   a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,

   wherein a power Pb of the base surface, a defocus power Ps of the defocus surfaces, and a refractive index N of a lens substrate serving as a basis of the optical faces satisfy a relationship of Pb < -0.5(N - 1) - Ps.

3. An eyeglass lens comprising:

   two optical faces on an object side and an eyeball side, at least one of which has

   a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,

   wherein a power Pb of the base surface, a defocus power Ps of the defocus surfaces, an arrangement pitch L of the defocus surfaces, and a flat surface size φ of the defocus surfaces satisfy a relationship of $(-Ps \times \varphi^2)/L^2 < Pb$.

4. A method for designing an eyeglass lens, comprising the step of:

   designing two optical faces on an object side and an eyeball side such that at least one of the two optical faces has a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A, wherein in the step of designing the optical faces, the base surface and the defocus surfaces are designed such that a power Pb of the base surface and a defocus power Ps of the defocus surfaces satisfy a relationship of -0.25 Ps < Pb < -Ps.

5. A method for designing an eyeglass lens, comprising the step of:

   designing two optical faces on an object side and an eyeball side such that at least one of the two optical faces has a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,
wherein in the step of designing the optical faces, the base surface and the defocus surfaces are designed such that a power Pb of the base surface, a defocus power Ps of the defocus surfaces, and a refractive index N of a lens substrate serving as a basis of the optical faces satisfy a relationship of Pb < -0.5(N - 1) - Ps.

6. A method for designing an eyeglass lens, comprising the step of:

designing two optical faces on an object side and an eyeball side such that at least one of the two optical faces has a base surface configured to cause a luminous flux incident from the object side to exit to the eyeball side and converge to a position A on a retina of an eyeball, and a plurality of defocus surfaces configured to cause a luminous flux incident from the object side to exit to the eyeball side and converge to a position B further away from the object side than the position A,
wherein in the step of designing the optical faces, the base surface and the defocus surfaces are designed such that a power Pb of the base surface, a defocus power Ps of the defocus surfaces, an arrangement pitch L of the defocus surfaces, and a flat surface size $\varphi$ of the defocus surfaces satisfy a relationship of $(-Ps \times \varphi^2)/L^2 <$ Pb.

FIG. 1

**FIG. 2**

(a)

(b)

# FIG. 3

# FIG. 4

(a)

Large amount of sag

(b)

Large amount of sag

(c)

Small amount of sag

**FIG. 5**

(a)

Boundary position          Boundary position

(b)

Boundary position    Local minimum point    Boundary position

**FIG. 6**

(a)

(b)

# FIG. 7

## INTERNATIONAL SEARCH REPORT

| International application No. |
|---|
| **PCT/JP2022/045392** |

**A.    CLASSIFICATION OF SUBJECT MATTER**

*G02C 7/06*(2006.01)i
FI:    G02C7/06

According to International Patent Classification (IPC) or to both national classification and IPC

**B.    FIELDS SEARCHED**

Minimum documentation searched (classification system followed by classification symbols)

G02C7/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-5081 A (HOYA LENS THAILAND LTD.) 14 January 2021 (2021-01-14) | 1, 2, 4, 5 |
|   | paragraphs [0001], [0031]-[0076], [0080], [0081], [0085], table 1, fig. 1-5 |   |
| Y | paragraphs [0001], [0031]-[0076], [0080], [0081], [0085], table 1, fig. 1-5 | 3, 6 |
| Y | JP 2021-157126 A (HOYA LENS THAILAND LTD.) 07 October 2021 (2021-10-07) | 3, 6 |
|   | paragraphs [0001], [0021], [0062], [0078], fig. 1 |   |
| A | US 10442774 B1 (VALVE CORP.) 15 October 2019 (2019-10-15) | 1-6 |
|   | fig. 2 |   |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |   |
|   | Telephone No. |

Form PCT/ISA/210 (second sheet) (January 2015)

**INTERNATIONAL SEARCH REPORT**
Information on patent family members

International application No.

**PCT/JP2022/045392**

| Patent document cited in search report | | | Publication date (day/month/year) | Patent family member(s) | | | Publication date (day/month/year) |
|---|---|---|---|---|---|---|---|
| JP | 2021-5081 | A | 14 January 2021 | US 2022/0082864 A1<br>paragraphs [0001], [0107]-[0165], [0170]-[0182], table 1, fig. 1-5<br>WO 2020/262569 A1<br>EP 3990975 A1<br>KR 10-2021-0107102 A<br>CN 113366377 A<br>SG 11202103963S A | | | |
| JP | 2021-157126 | A | 07 October 2021 | EP 4123364 A1<br>paragraphs [0001], [0021], [0062], [0078], fig. 1<br>WO 2021/186873 A1<br>CN 113406811 A<br>KR 10-2022-0100070 A<br>TW 202136864 A | | | |
| US | 10442774 | B1 | 15 October 2019 | (Family: none) | | | |

Form PCT/ISA/210 (patent family annex) (January 2015)

**REFERENCES CITED IN THE DESCRIPTION**

**Patent documents cited in the description**

- WO 2020067028 A